# EUROPEAN PATENT APPLICATION

(11) **EP 0 911 100 A2**
(43) Date of publication of application: **28.04.1999**
(21) Application number: 98119606.6
(22) Date of filing: 16.10.1998
(51) Int. Cl.: B23C 3/12, B27D 5/00

(54) **Forming device for the working of panel rims, and machine equipped with the same**

(30) Priority: 22.10.1997 IT MI972375
(71) Applicant: Fravol Export S.r.l., 35010 Vigonza (PD) (IT)
(72) Inventor: Volpato, Giannino, 35027 Noventa Padovana (PD) (IT)
(74) Representative: Savi, Alberto

(57) **Abstract**

The present invention relates to a forming device (1) for the processing of panel rims, comprising means capable of bringing a tool (16) rotating around an axis parallel to the plane of the panel (P) and perpendicular to the direction of motion of the latter into contact with the panel rim to be processed; means capable of impressing on said tools a sliding motion to a direction parallel to the direction of motion of the panel; and means capable of impressing on said tool a simultaneous rotary motion around an axis parallel to the axis of rotation of the tool wherein devices are provided for common moving capable of impressing both the said sliding motion and the said simultaneous rotating motion on the tool.

## Description

This invention refers to a forming device for the working of panel rims, comprising a support movable along the forward motion of the panels, a tool mounted on said support capable of moving along a pair of axes perpendicular to the direction of motion of the panels and of bringing said tool in contact with the panel to be processed, and suitable means to advance said support together with the panel, while simultaneously rotating said support around one of said axes perpendicular to the forward motion of the panel.

As governed by an electro-pneumatic control of the machine, the assembly shifts until a sensor or similar device comes in contact with one end of the panel; at this point the assembly starts moving forward together with the panel while simultaneously rotating 180°, enabling the tool to work the rim facing one of the heads. At the end of this first rotation the assembly stops, while the panel keeps moving until it reaches the opposite extremity facing the head.

At this point the assembly moves again together with the panel, while rotating another 180° and thus completing the work facing the second extremity.

These characteristics make it possible to consecutively and in a single cycle perform the working of the rims facing the two opposite edges of a panel, in a wholly automatic manner.

The invention also refers to a machine for the working of wood, and in particular for the working of panels, equipped with the mentioned assembly.

In the furniture trade, the panels are usually completed by applying a rim which is subsequently finished by rounding off its edges.

This rounding-off process is normally carried out after the panel has been completed with a rim, on separate machines where an appropriately profiled tool moves around the panel, following its contour while the panel stands still.

This system is widely practiced but suffers from the drawback that it requires a further processing phase and separate sets of equipment.

The European patent no. 0.395.996 describes a rounding-off assembly applied to a rimming machine designed for in-line profiling operations, comprising a a milling assembly mounted on a support rotating around an axis internal to the profile of the panel and corresponding to the axis of symmetry of the panel itself, parallel to that of the tool.

The tool is brought in contact with the panel, whereupon the support rotates around the axis of symmetry of the panel, so as to enable the tool to perform the rounding-off opposite the edge.

This set of equipment suffers however from the drawback that because the rotating axis must coincide with the axis of symmetry of the panel, the machine must be newly adjusted every time a panel of different thickness is processed.

Moreover, this device has a complex construction (electronic PLC-control).

For the reasons outlined above, the trade feels the need for some means capable of carrying out the profiling process in a continuous step, by using an in-line rounding-off assembly and a device capable of automatically adapting to panels of various thicknesses, without having to interrupt the work to calibrate and adjust the machine.

The mentioned problem is now solved by this invention, which offers a rounding-off unit for the processing of panel rims comprising a mobile support moving along the forward motion of the panel, a tool mounted on the support and capable of moving along a pair of axes perpendicular to the direction of the forward motion of the panel and means capable of moving said support forward together with the panel, while simultaneously rotating it around one of the axes perpendicular to the direction of the panel's forward motion and in parallel to the axis of the tool.

This invention will now be described in detail, for purely exemplifying and non limiting purposes, with reference to the attached drawings in which:
- Figure 1 is a view of the rounding-off device according to the invention, seen from the rear side with respect to the tool;
- Figure 2 is a vertical cross-section of the unit according to the invention;
- Figure 3 is a front view of the same,
- Figure 4 is a top view of the unit according to the invention;
- Figure 5 is a view of a detail of the tool positioning devices in a unit according to the invention.

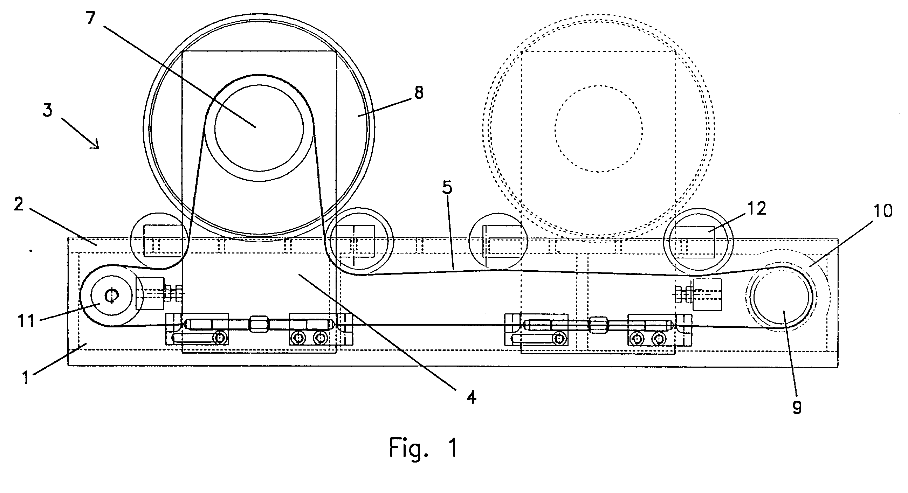

With reference to Figure 1, 1 generally indicates the structure of a device for the working of the panels, which carries a firmly attached guide 2 to slide the unit according to the invention, designated as a whole by 3.

In particular, the unit 3 is mounted on a sliding support 4 which slides on the guide 2 under the action of a chain 5 having its ends attached to the support 4.

The support 4 holds a shaft 7 firmly attached to a support 8 carrying the profiling devices, to be described in greater detail below.

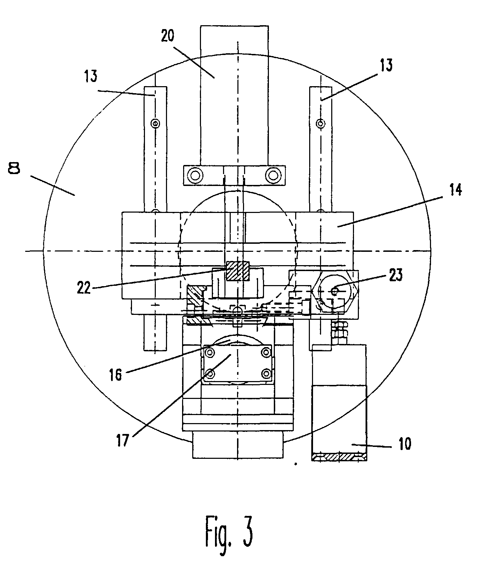

The chain is mounted on a driving sprocket 9 actuated by a motor 10 better evidenced in Figure 3, a tensioning wheel 11 and a pair of transmission wheels 12, mounted on a support 4 next to the support 8.

This configuration is such that a rotation of the chain moves the support 4 forward on the guide 2, and that the support 8 simultaneously rotates around its axis, indicated by "X", parallel to the the plane of the panel and perpendicular to the direction of latter's forward motion.

A change in the tooth ratio of the sprocket 9 and of the support 8 makes it possible to adjust the span of the rotation of the support depending on the forward motion of the support 4, so as to perfectly synchronize the two motions.

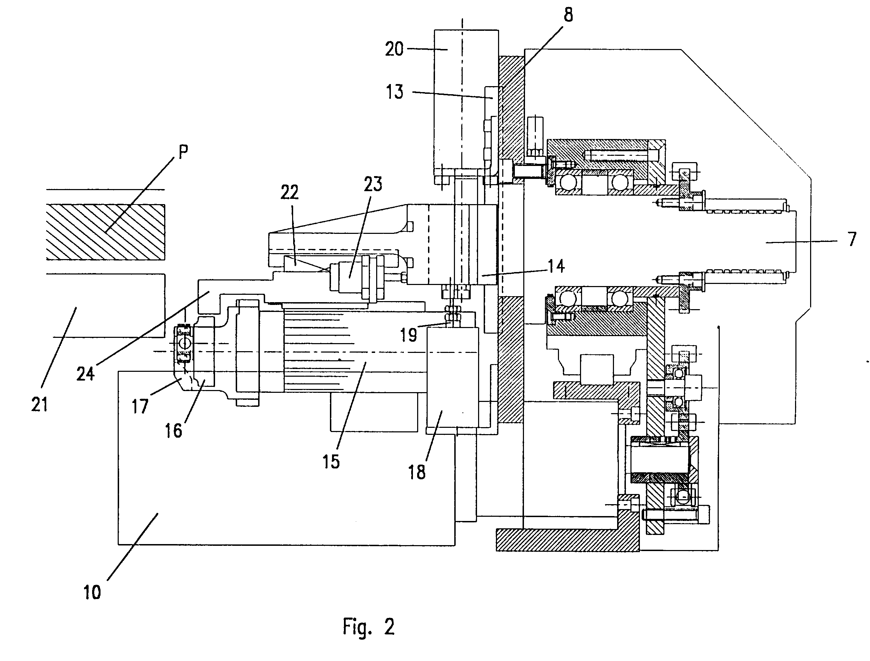

The support 8 (Figure 2) carries a firmly attached pair of guides 13 with a sliding cursor 14 which constitutes the support of a processing unit comprising a motor 15, a tool 16 and a feeler 17.

The motor sets the tool in motion around an axis X'-X' parallel to the axis X-X.

The cursor 14 is subject on one side to the action of a pneumatic cylinder 18 whose stem 19 constitutes a stop to adjust the position of the driving unit at the beginning of the processing, as described below.

On the opposite side the cursor 14 is subject to the action of a second pnumatic cylinder 20, which recalls the cursor 14 to take the tool back into contact with a panel P, that a crawler-mounted device shown in a simplified manner and indicated by 21 in Figure 2 feeds to the working site.

The cursor 14 comprises a second sled 22 and the motor and tool unit can slide along this sled, in a direction parallel to the axis X, to approach and move away from the panel.

These displacements are governed by a further pneumatic cylinder, shown by the number 23.

An adjustable feeler 24 touches on the rim of the panel to ensure the proper positioning of the tool 16 during the work.

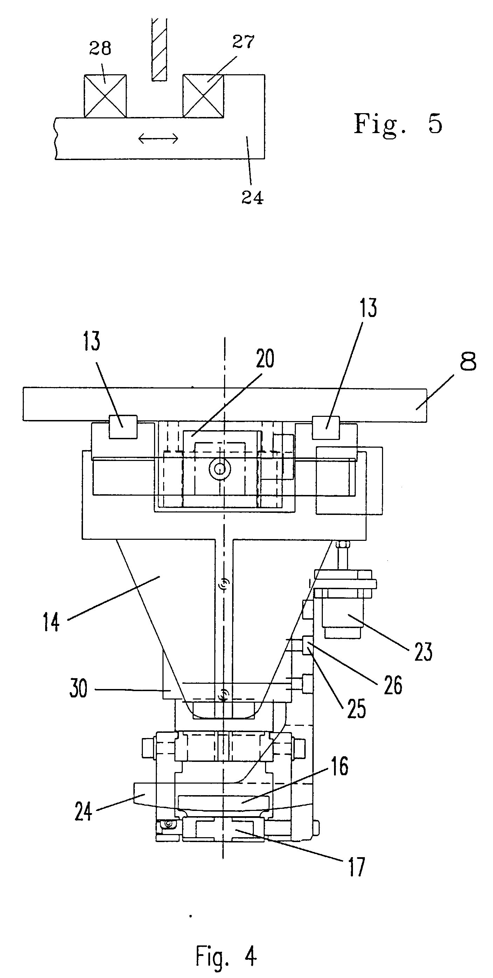

The feeler 24 is mounted on the support 30 (Figure 4) in an adjustable manner, as shown in a simplified manner in the detail of Figures 4 and 5.

In particular, the end-stop 24 carries an eyelet 25 passing a screw 26 which allows tightening the end-stop 24 on the support 30 in the desired position.

This allows a precise positioning of the end-stop depending on the thickness of the rim applied to the panel.

It suffices in fact to loosen the screw 26, insert a piece of rim between an appendix 27 firmly attached to the end-stop 24 and a fixed shoulder 28 and to retighten the screw.

This makes it possible to achieve a precise positioning of the end-stop 24 depending on the thickness of the rim.

The operation of the mentioned device is as follows:

The machine is first set-up by adjusting, using the pneumatic cylinder 18, the starting position of the motor and tool unit.

It is in fact possible to slide the support 14 along the guides 13 from a lower position, in which the tool does not interfere with the path of the panel and so as to utilize the machine as a simple panel processing machine, to a second raised-up position, in which the tool interferes with the path of the panel and the machine can be used for rounding-off.

In the first case the pneumatic cylinder 18 is actuated until the support 14 is lifted and brought to the appropriate height (Figure 2).

At this point, the crawler-mounted carrier 21 moves the panel forward, and when the latter comes to face the tool, a microswitch (not shown in the figure) releases the motion of the unit.

The pneumatic cylinder 20 recalls the support 14 with the motor and tool upward, until the feeler 17 comes into contact with the lower rim of the panel (the tool is already in motion).

This actuates the motor 10, which starts the chain 5.

The ratio between the teeth of the chain and those of the wheel firmly attached to the support 8 is such that the support 4 with the rounding-off unit moves forward on the guide 2 at the same speed as the panel.

Due to its particular path, the chain drags along the rounding-off unit while also rotating it around the axis X, so that during its forward motion the tool 16 follows every contour of the panel, thus completing the processing of the rim facing the first extremity.

When the support 8 together with the motor and tool unit has performed a rotation of 180°, a microswitch stops the motor 10, so that the rounding-off unit stops with the motor positioned in the upper part of the panel, which continues to advance while freely sliding below the tool.

A further sensor notes when the rear rim of the panel comes to face the tool, and again releases the activation of the motor 10, which again actuates the chain to move the unit together with the panel forward and rotate it again around the axis X, until it covers another 180°.

In this manner the tool rounds-off the rim opposite the rear extremity of the panel, whereupon the tool can be brought back to the starting position so as to initiate a new working cycle.

It must be noted that the various sensors which sense the position of the panel and release the actuation of the various devices comprising the rounding-off unit are of a known type. This makes their description unnecessary, as these systems are already well known to the experts in the trade.

The equipment described therefore makes it possible to round-off the rims of panels of any height covered by the capacity of the machine in which the rounding-off device is installed, without a need to calibrate the latter based on the various heights and profiles of the panels.

An expert of the trade may apply numerous changes and variants, which must however all be considered as falling within the scope of this invention.

## Claims

1. Forming device for the processing of panel rims, comprising first means capable of bringing a tool rotating around an axis parallel to the plane of the panel and perpendicular to the direction of motion of the latter into contact with the panel rim to be processed, first means capable of impressing on said tools a sliding motion to a direction parallel to the direction of motion of the panel, and second means capable of impressing on said tool a simultaneous rotary motion around an axis parallel to the axis of rotation of the tool, characterized in that it provides for common moving devices capable of impressing both the said sliding motion as the said simultaneous rotating motion on the tool.

2. Forming device according to claim 1, in which said tool is mounted on a support mounted in turn on a support sliding on a guide parallel to the direction of forward motion of the panels, characterized in that said common actuating means are constituted by a chain, moved by a motor, affixed to said support and engaging a toothed profile firmly attached to said support so as to govern a rotation simultaneous with a forward motion of said support.

3. Device according to the foregoing claims, characterized in that it provides a support 14 of a motor and tool unit sliding along guides 13 firmly attached to said support, while means 20 are provided capable of acting on said support so as to maintain said tool in contact with the panel to be processed.

4. Device according to claim 3, characterized in that said means are constituted by a pneumatic cylinder.

5. Device according to claim 4, characterized in that said motor and tool complex may slide along a guide firmly attached to said support 14 in a direction parallel to the axis of rotation of the tool, so as to approach and move away from the panel to be processed, due to the fact that some checking means are provided to adjust the run of said motor and tool complex with respect to the rim of the panel.

6. Device according to each of the foregoing claims, characterized in that it provides for some means 18 for pre-positioning the motor and tool complex, capable of positioning said support 14 together with said motor and tool complex from an operating position in which said tool interferes with the path of said panel to a resting position in which said motor and tool complex does not interfere with said path, so as to allow the use of the machine as a rimming machine.

7. Device according to claim 3, characterized in that said means are constituted by a linear actuator.

8. Device according to claim 8, in which said linear actuator is a pneumatic cylinder 27.

9. Device according to claim 3, characterized by the fact that said checking means 24 capable of positioning the tool with respect to the rim of the panel are constituted by a stop mounted in a sliding manner on said support 14 and lockable in any position, where said stop is fitted with a protruding surface 27 capable of engaging with a fixed stop 28 firmly attached to said support, so as to allow inserting a distance element, in particular a piece of the rim applied to the panel, thereby allowing a precise adjustment of said stop depending on the thickness of said rim.

10. A rimming machine characterized in that it provides for a profiling device according to any of the foregoing claims.
